# EUROPÄISCHE PATENTSCHRIFT

(11) **EP 2 104 352 B1**
(45) Veröffentlichungstag und Bekanntmachung des Hinweises auf die Patenterteilung: **29.08.2018**
(21) Anmeldenummer: 08102702.1
(22) Anmeldetag: 18.03.2008
(51) Int. Cl.: H04N 7/24

(54) **Verfahren und System zur Optimierung des Informationsgehaltes bei Multimedia-Übertragungen basierend auf dynamischer komplementärer Quellenauswahl**
Method and system for optimising the information content of multimedia transmissions based on dynamically complementary source selection
Procédé et système d'optimisation du contenu d'information lors de transmissions multimédia basées sur la sélection dynamique d'une source complémentaire

(43) Veröffentlichungstag der Anmeldung: 23.09.2009
(73) Patentinhaber: Deutsche Telekom AG, 53113 Bonn (DE)
(72) Erfinder: Dr. Siebert, Matthias, 67112 Mutterstadt (DE); Xu, Bangnan, 64295 Darmstadt (DE); Dipl.-Phys. Kraus, Josef, 64807 Dieburg (DE); Bayer, Nico, 61231 Bad Nauheim (DE); Sivchenko, Dimitri, 35390 Giessen (DE); Roos, Andreas, 64354 Reinheim (DE)
(74) Vertreter: 2K Patentanwälte Blasberg Kewitz & Reichel

(56) Entgegenhaltungen:
- US-A1- 2006 294 546
- WOLF-TILO BALKE ET AL: "A Quality and Cost-based Selection Model for Multimedia Service Composition in Mobile Environments" WEB SERVICES, 2006. ICWS '06. INTERNATIONAL CONFERENCE ON, IEEE, PI, 1. September 2006 (2006-09-01), Seiten 621-628, XP031031606 ISBN: 978-0-7695-2669-0
- MARTINS F C M ET AL: "Efficient receiver-driven layered video multicast using H.263+ SNR scalability" IMAGE PROCESSING, 1998. ICIP 98. PROCEEDINGS. 1998 INTERNATIONAL CONFE RENCE ON CHICAGO, IL, USA 4-7 OCT. 1998, LOS ALAMITOS, CA, USA,IEEE COMPUT. SOC, US, 4. Oktober 1998 (1998-10-04), Seiten 32-35, XP010308955 ISBN: 978-0-8186-8821-8
- OSTERBERG P ET AL: "Receiver-controlled joint source/channel coding on the application level, for video streaming over WLANs" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, Bd. 3, 22. April 2003 (2003-04-22), Seiten 1558-1561, XP010862422 ISBN: 978-0-7803-7757-8
- "Digital cellular telecommunications system (Phase 2+); Universal Mobile Telecommunications System (UMTS); Network architecture (3GPP TS 23.002 version 7.2.0 Release 7); ETSI TS 123 002" ETSI STANDARDS, LIS, SOPHIA ANTIPOLIS CEDEX, FRANCE, Bd. 3-SA2, Nr. V7.2.0, 1. Juni 2007 (2007-06-01), XP014037685 ISSN: 0000-0001
- TIMMERER C ET AL: "Digital Item Adaptation: Overview of Standardization and Research Activities" IEEE TRANSACTIONS ON MULTIMEDIA, IEEE SERVICE CENTER, PISCATAWAY, NJ, US, Bd. 7, Nr. 3, 1. Juni 2005 (2005-06-01), Seiten 418-426, XP011131800 ISSN: 1520-9210
- CHANG S-F ET AL: "Video Adaptation: Concepts, Technologies, and Open Issues" PROCEEDINGS OF THE IEEE, IEEE. NEW YORK, US, Bd. 93, Nr. 1, 1. Januar 2005 (2005-01-01), Seiten 148-158, XP011123860 ISSN: 0018-9219
- PANAGIOTAKIS S ET AL: "Context Sensitive User Profiling for Customised Service Provision in Mobile Environments" PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, Bd. 3, 11. September 2005 (2005-09-11), Seiten 2014-2018, XP010928042 ISBN: 978-978-38007-2-4
- MAGALHAES J ET AL: "Using MPEG standards for multimedia customization" SIGNAL PROCESSING. IMAGE COMMUNICATION, ELSEVIER SCIENCE PUBLISHERS, AMSTERDAM, NL, Bd. 19, Nr. 5, 1. Mai 2004 (2004-05-01), Seiten 437-456, XP004504930 ISSN: 0923-5965

## Beschreibung

Die Bereitstellung von Multimedia-Inhalten und deren Ende-zu-Ende (E2E) Transport von dedizierten Servern bis hin zum Kunden spielen eine zunehmend wichtigere Rolle im Diensteportfolio von Telekommunikationsanbietern.

Die US 2006/0294546 und die IEEE Transaction on Multimedai Vol7, No.3 June 2005 "Ditital Item Adaption: Overview of Standization and Research Activities" beschreiben ein Verfahren zur Veränderung der Zusammensetzung von Multimediadaten.

Dabei soll die Diensteverfügbarkeit auch über Systemgrenzen hinweg möglich sein, so dass Konvergenzentwicklungen wie sie derzeit bei ETSI TISPAN [1] oder 3GPP
IMS [2] spezifiziert werden dazu führen, dass die verwendete Transporttechnologie oder das Zugangsnetz nicht länger bestimmen, welche Dienste dem Kunden
angeboten werden können und welche nicht. Stattdessen soll die Heterogenität der Zugangstechnologien sogar zum Vorteil des Kunden genutzt werden derart, dass unter dem Schlagwort "Always Best Connected" (ABC) die jeweils optimale

Verbindung automatisch gewählt wird, sei es per Festnetz (z.B. DSL), drahtloser Anbindung (z.B. WLAN) oder Mobilfunk (z.B. UMTSIHSPA).

All dies kann unter dem Überbegriff Dienste-Mobilität (Service Mobility) zusammengefasst werden. Dienste-Mobilität beschreibt somit ein Paket konsistenter
Dienste, welche unabhängig vom Zugangsnetz, dem Endgerät oder dem Aufenthaltsort erbracht werden können. Betrachtet man nun die Nutzung eines
konkreten Dienstes wie etwa das Konsumieren von Multimedia-Inhalten auf einem
bestimmten Endgerät El, so erfolgt dies innerhalb einer so genannten Sitzung (Session). Durch die Unterstützung der Dienste-Mobilität muss diese Sitzung
allerdings nicht zwangsweise durchweg auf El terminieren, sondern kann auf ein anderes Endgerät E2 umgeleitet werden. Diesen Vorgang bezeichnet man allgemein
als Sitzungs-Mobilität (Session Mobility) oder Sitzungs-Ubergabe (Session Handover). Anwendungen hierfür sind z.B. das Verlegen einer Telefonie-Session von
einem Mobil- auf ein Festnetz-Endsystem oder umgekehrt, aber auch das Auslagern einzelner Elemente einer Session auf ein anderes Endsystem [3].

Eine immer größere Rolle bei der Verwaltung von Sessions über Systemgrenzen hinweg kommt dem IP Multimedia Subsystem (IMS) [4] zu. IMS unterstützt den standardisierten Zugriff auf Dienste aus unterschiedlichen Netzwerken. Die
Signalisierung basiert auf dem von der IETF spezifizierten Session Initiation Protokoll (SIP) [5], welches auch im Kontext von Voice over IP (VolP), umgangssprachlich bekannt als "Internettelefonie", zum Einsatz kommt.

Mit Hilfe von IMS und SIP ist es möglich, effiziente Session Handover zu steuern. Als
Beispiel dient hier ein Szenario, bei dem eine Multimedia-Session bestehend aus einem Video- und einem Audio Stream zunächst auf ein modernes HDTV fähiges Endgerät beim Kunden zu Hause terminiert. Aufgrund der breitbandigen (Festnetz-) Anbindung sind Datenraten von 18 Mbit/s für den HD Video Stream und 448 kbit/s für den Dolby Digital Audio Stream möglich. Wenn nun der Kunde das Haus verlässt, kann er unter Initialisierung eines Session Handovers die gerade aktive Sitzung auf ein anderes (mobiles) Endgerät transferieren und mitnehmen. Entsprechend den neuen Randbedingungen, müssen dabei jedoch die Datenraten für Video und Audio angepasst werden. Einschränkende Faktoren dabei sind die deutlich geringere Datenrate über die nun aktive Funkschnittstelle aber auch die reduzierten Möglichkeiten des neuen Endgerätes in Bezug auf Displaygröße und Rechenleistung zur Decodierung der Streams.

Der heutige Stand der Technik konzentriert sich auf die Realisierung des oben beschriebenen Session Handovers. Zum einen wird eine möglichst nahtlose (seamless) Übergabe der Session zwischen den verschiedenen Endgeräten angestrebt. Zum anderen wird versucht, mit Hilfe von Adaptierungstechniken die Streams einer Session den jeweils vorherrschenden Randbedingungen anzupassen. Für die Funkstrecke bedeutet dies, dass aus einer Vielzahl verfügbarer Kombination aus Modulations- und Coderaten, sogenannten Phy-Modes, gewählt werden kann. Bei der endgerätespezifischen Adaptierung der Streams hingegen, wird schon an der Quelle ein entsprechendes Transcoding der Multimedia-Inhalte vorgenommen, so dass der 18 Mbitls HD Video Stream auf Kosten der Auflösung auf ein beliebig schmalbandiges Signal in der Größenordnung einiger hundert kbitls heruntergerechnet wird. Ahnliches Transkodieren erfolgt für den Audio Stream entsprechend.

Der Nachteil all dieser Adaptierungsversuche besteht darin, dass hier jeweils technische Parameter in den Vordergrund gestellt werden, welche es zu variieren gilt. Es wird somit unter allen Umständen versucht, die eigentlichen Inhalte einer bestehenden Multimedia Session unverändert zu übertragen. Somit ist es zwar möglich, dem Kunden eine an sein jeweiliges Umfeld (mobil unterwegs mit schmalbandiger Anbindung und kleinem Display E---> zu Hause mit breitbandiger Anbindung und großem Flat Screen) angepasste Übertragung zu bieten, es erfolgt jedoch keine Optimierung des eigentlichen Informationsflusses bzw. der Art und Weise wie der Inhalt dem Kunden präsentiert wird (z.B. Videofilm, Bildergeschichte, Hörspiel). Aus Kundensicht wäre oft ein fließender Übergang zwischen verschiedenen Präsentationsformen, angepasst an Situation und Endgerät, wünschenswert.

Von ein und derselben Primärquelle, wie einem Sportereignis, existieren oft derzeit verschiedene Produktionen (Fernsehübertragungen, Radioübertragungen, Lifeticker), die durchaus zeitsynchron übertragen werden oder abspielbar wären. Diese verschiedenen Produktionen werden derzeit über verschiedene Medien unkorreliert angeboten. Manchmal versucht der Kunde spontan und uninformiert zwischen Produktionen zu wechseln, z. B. wenn ihm ein gemeinsam genutztes Endgerät entzogen wird (Frau beansprucht Fernsehen, Mann wechselt zum Radio in die Küche, um Fußballspiel zu Ende sehen zu können). Dabei sucht der Kunde oft umständlich einen neuen Informationsfluss mit eventuell neuer Präsentationsform.

### Überblick über die Erfindung:

Aufgabe der vorliegenden Erfindung ist ein Verfahren und eine Vorrichtung bereitzustellen, die alternativen zur hardwareseitigen Kompression bereitstellt.

Gelöst wird diese Aufgabe durch eine Erfindung mit den Merkmalen der unabhängigen Ansprüche.

Das vorliegende Erfindung beschreibt die Weiterentwicklung des Standes der Technik von der Sitzungs-Ubergabe (Session Handover) hin zur Übergabe von Inhalten bzw. dem Wechsel oder der Anpassung der Präsentationsform von Inhalten, im Folgenden als "Content Handover" bezeichnet. Während der Session Handover gekennzeichnet ist durch die starre Auswahl der immergleichen Quellen' und Inhalte, zielt der Content Handover auf eine dynamische Quellauswahl mit komplementären und/oder redundanten Inhalten, um so eine optimale Informationsausbeute für den Nutzer zu erzielen.

Als eine Quelle wird hier durch den zu einem Ereignis gehörenden Datenstrom bezeichnet. Dieser kann zwar in unterschiedlichen Qualitätsstufen vorliegen, letztlich sind diese aber alle gleichen Ursprungs. Eine Fernsehkamera kann beispielsweise (u. U. gleichzeitig) mehrere qualitativ unterschiedliche Streams liefern, dennoch würde es sich nur um eine einzige Quelle zur Beschreibung eines Primärereignisses bzw. Multimediainhalts handeln. Erst die Hinzunahme einer zweiten Kamera (mit anderer Perspektive) würde definitionsgemäß eine zweite Quelle darstellen.

Bezogen auf eine Multimedia Session bestehend aus Video- und Audiostreams beschränkt sich der Content Handover also nicht auf das Anpassen von reinen Datenraten, sondern bietet darüber hinaus eine Adaptionsleistung, welche die zu übermittelnden Inhalte mit berücksichtigt. Zu diesem Zweck werden Video- und Audioinformationen nicht länger entkoppelt voneinander betrachtet, sondern beide werden als komplementäre Präsentationsformen (= Informationspfade) desselben Primärereignisses gesehen, an dem der Kunde teilhaben soll. Verschlechtert sich nun einer dieser beiden Informationspfade, so kann der Informationsgehalt des anderen Pfades (bzw. der Multimediaquelle) erhöht werden, um eine bleibende Optimierung des gesamten Informationsflusses aufrechtzuerhalten. In der Praxis kann das so aussehen, dass eine verminderte Videoqualität (z.B. kleine Details einer Szene sind nach originären Session Handover von einem Endgerät mit großen Display auf ein Endgerät mit kleinen Display nicht mehr hinreichend genug erkennbar) durch eine erweiterte Audiodeskription egalisiert wird. Die erweiterte Audiodeskription beschreibt dabei exakt das gleiche Ereignis, aber mit weitaus mehr Informationsinhalt. Technisch kann dies durch Hinzuschalten eines weiteren Audiostreams oder das Umschalten der originären Audiostreams auf einen informationsangereicherten neuen Audiostream realisiert werden.

### Figurenbeschreibung:

Es zeigt
Fig. 1 komplementäre Quellen zur Optimierung des Informationsflusses;
Fig. 2 Dynamischen komplementäre Quellen für Multimedia-Dienste
Fig. 3 mögliche Realisierung der Content Handover Funktionalität

### Ausführungsformen:

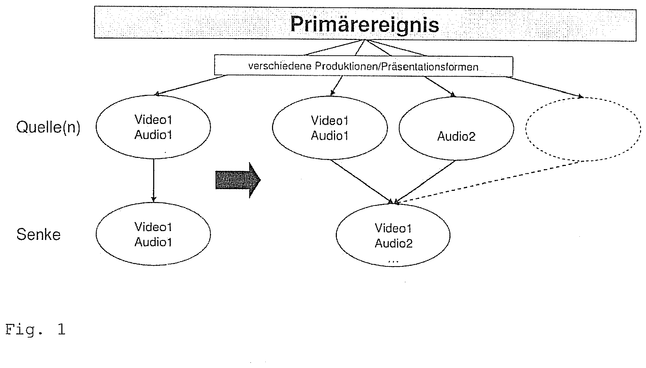

Eine grundlegende Idee ist in Fig. 1 skizziert. Zunächst erfolgt die Übertragung des Multimedia Streams (Video1+Audio1) von der Quelle zur Senke. Kann der Informationsfluss eines Teilstreams/Informationsflusses nicht aufrecht erhalten werden, beispielsweise aufgrund eines Session Handovers, so werden weitere Quellen zur Kompensation herangezogen. Diese weiteren Quellen zeichnen sich durch eine besondere inhaltliche und zeitliche Beziehung zu den ursprünglichen Quellen aus.

Die zur Realisierung des Verfahrens benötigten Funktionen umfassen allgemeine Bestandteile einer Service Delivery (Service Dienstleister) Plattform, welche durch spezifische Funktionen ergänzt werden. Zu den allgemeinen Elementen gehören z.B. spezielle Content Server für die Bereitstellung der Multimedia Inhalte, sowie Streaming Server, welche auch Datenratenadaptionen (Transcoding) vornehmen können. Zu den benötigten Komponenten gehören (vgl. Fi.g 2):

| | |
|---|---|
| - Multimedia Stream Splitter/Merger | (MSSM) |
| - Stream Observation & Content-Ciassification | (SOCC) |
| - Content Locator, Discovery & Selection | (CLDS) |
| - Profile und Priority Management | (PPMT) |

Der MSSM dient als Kopplungseinheit für verschiedene Multimedia-Streams, welche von unterschiedlichen Streaming Servern bereitgestellt werden können. Die Aufgabe des MSSM besteht darin, die unterschiedlichen Quellsignale so zusammenzusetzen, dass der für den Nutzer größtmögliche Informationsfluss gegeben ist. Dabei können einzelne Video-/Tonspuren auch unterdrückt werden, sofern sie keinen signifikanten Anteil am Gesamtfluss aufweisen. Eine weitere wichtige Aufgabe des MSSM ist die Synchronisierung der potenziell zeitlich versetzten Eingabesignale, welche aus unterschiedlichen Quellen geliefert werden.

Die Aufgaben des SOCC umfassen die genaue Beobachtung und inhaltliche Auswertung der Multimedia Streams, wobei der SOCC sowohl netzseitig als auch im Endgerät des Teilnehmers implementiert sein kann. Der SOCC beurteilt den Informationsgehalt der Einzelströme und bewertet deren komplementäre Eigenschaften. Auf diese Weise können im einfachsten Fall Transcoding-Befehle an die Streaming Server erfolgen, falls lediglich eine Bandbreitenanpassung notwendig ist. Stellt der SOCC jedoch fest, dass inhaltliche Abstriche beim Informationsfluss auftreten, so initiiert er die Hinzuschaltung weiterer Quellen. Zur Entscheidungsfindung kann der SOCC Zugriff auf entsprechende Profile haben {optionale PPMT Anbindung}.

Der CLDS ist die ausführende Einheit, welche sich zum Auffinden weiter Quellen verantwortlich zeichnet. Unter Berücksichtigung von nutzer-/betreiberspezifischen Prioritäten, welche in Form von Profilen durch das PPMT zur Verfügung gestellt werden, ermittelt der CLDS entsprechende Content Server, welche komplementär-redundante Multimedia-Inhalte des aktuellen Ereignisses bereitstellen. Das Verfahren zur Selektion der benötigten komplementären Multimediaquellen kann einerseits durch verfügbare Bandbreiten, die Fähigkeiten des Endgerätes/Zielgerätes, den Einstellungen des Benutzers bestimmt sein. Ferner kann es durch die Umgebung indem sich das Endgerät befindet bestimmt werden. Falls die Umgebung laut ist, so sind akustische Darstellungen nicht von Vorteil. Sollten die Bandbreite zu gering sein oder die Leistungsfähigkeit und Darstellungsfähigkeit des Gerätes nicht vorhanden sein, macht eine Videoübertragung wenig Sinn. Die Steuerung des Algorithmus kann Schwellwertabhängig sein, wobei eine Vielzahl von Parameter in den Algorithmus einfließen können.

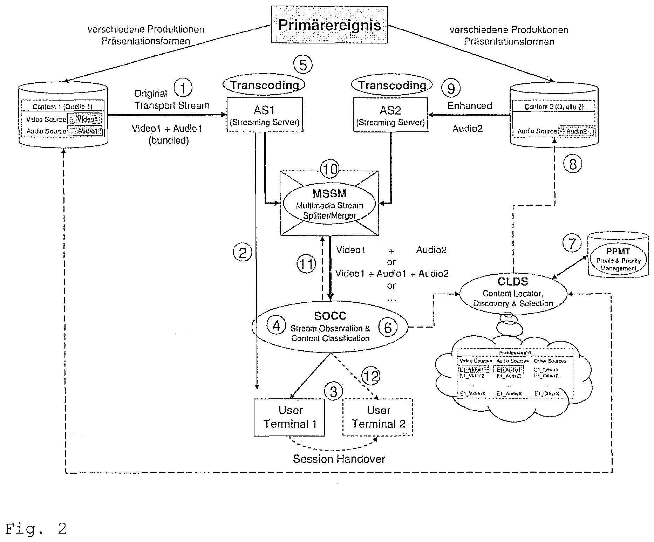

Fig. 2 verdeutlicht das erfindungsgemäße Verfahren der dynamischen komplementären Quellenauswahl sowie das Zusammenspiel der einzelnen Funktionen. Wichtig dabei ist, dass zur Erbringung eines Content Handovers abhängig vom Szenarium einzelne Funktionen auch optional sein können. Beispielsweise kann auf das MSSM verzichtet werden, wenn ein vollständiger Quellenwechsel durch das SOCC getriggert wird und alte sowie neue Quelle bereits synchron sind. Implementierungsabhängig ist außerdem eine Realisierung verschiedener Funktionen sowohl im Netz als auch im Endgerät denkbar
1. Ein Content Server liefert zu einem aktuellen Primärereignis jeweils einen Video- und einen Audiostream, welche zunächst als gekoppelt betrachtet werden können.
2. Über einen Streaming Server AS1 werden die Daten dem Endkunden am User Terminal 1 zugänglich gemacht.
3. Wechselnde Rahmenbedingungen (hier- Session Handover) machen die Adaption des Multimedia Streams notwendig.
4. Der SOCC erkennte physikalische Einschränkungen und reagiert zunächst mit der Anweisung, die verwendeten Bandbreiten (Bildqualität, Auflösung, Bildwiederholrate, Audioqualität) anzupassen.
5. Der Streaming Server AS1 übernimmt Transcodieraufgaben für die Streams Videol und/oder Audio2.

Dies bedeutet nicht, dass der SOCC zwangsläufig innerhalb des Datenpfades implementiert sein muss. Es langt, wenn entsprechende Statusinformationen von im Datenpfad liegenden Entitäten übermittelt werden, so dass die im SOCC angesiedelten Funktionen Steuerentscheidungen treffen können.

Der SOCC erkennt, dass weitere Maßnahmen zur Aufrechterhaltung des optimalen Informationsflusses notwendig sind und beauftragt den CLDS, alternative Quellen zur Übertragung des Primärereignisses zu nennen bzw. zu finden. Dabei können die entsprechenden Suchvorgänge bereits früher stattgefunden haben.

Der CLDS sucht unter Berücksichtigung der im PPMT hinterlegten Profile nach weiteren Quellen.
Es wird eine zu Videol und Audiol komplementäre Quelle Audio2 selektiert.
Die erweiterte Audiospur wird über einen Streaming Server AS2 eingespeist.
Der MSSM synchronisiert die verschiedenen Streams. Entsprechend den Vorgaben aus dem SOCC, werden Videol und Audiol ganz oder teilweise entkoppelt und mit Audio 2 gemischt.

Falls Audio2 alle relevanten Inhalte von Audiol mit einschließt, kann auf Audio 1 verzichtet werden. Weitere Kombinationen bis hin zu einer vollständigen Substitution von Video1+Audio1 durch Audio2 sind denkbar.
der Informationsfluss ist entsprechend den neuen Randbedingungen optimiert.

Im Folgenden ein Ausführungsbeispiel für IMS basierte Funktionsanordnungen.

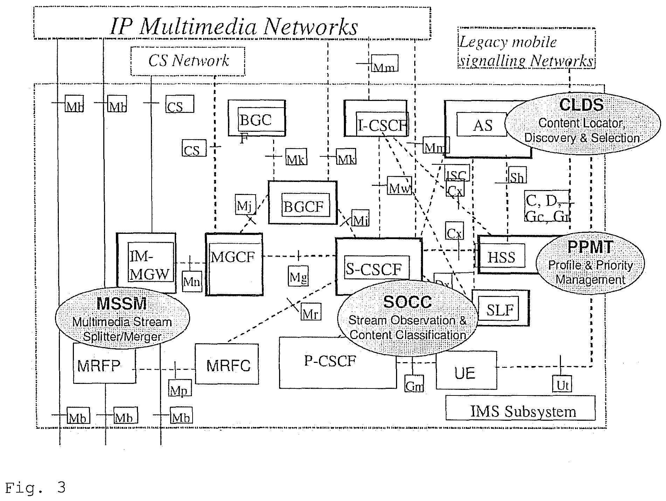

Die zu realisierenden Funktionen MSSM, SOCC, CLDS und PPMT können - müssen aber nicht - durch eine IMS gesteuerte Plattform realisiert werden. Abbildung 3 zeigt die Referenzarchitektur des IMS Kernnetzes [6] und eine mögliche Zuordnung der patentrelevanten Funktionen. Alle Aufgaben in Bezug auf Stream-Steuerung sind klassisch durch eine Call Session Control Function (CSCF) wahrzunehmen. Somit wäre eine Realisierung des SOCC durch eine Erweiterung im S-CSCF sinnvoll. Eine analoge Zuordnung erfolgt für die Funktion des PPMT, welche innerhalb des HSS anzusiedeln wäre. Das Aufspüren geeigneter Inhalte und Server durch das CLDS kann man als neuen Dienst betrachten. Dedizierte Application Server (AS) könnten hier aktiv werden. Das Splitten und Multiplexen innerhalb des MSSM könnte ebenso als Dienst aufgefasst werden, womit es auch durch einen AS zu realisieren wäre. Innerhalb des IMS sind jedoch dedizierte Blöcke zur Verwaltung und Verarbeitung von Multimedia-Streams vorgesehen. Entsprechend würden MSSM Aufgaben eher im Bereich des Multimedia Resource Function Processor (MRFP) in Zusammenspiel mit entsprechenden IM(S)-Media Gateway (MGW) realisiert werden.

### b) Ausführungsbeispiele für Content Handover Szenarien/Dienste

### 1) Session Handover von Endgerät HDTV - MDA mit erweiterter Audiodeskription

Das in Fig. 2 beschrieben Verfahren kann vorteilhaft genutzt werden, falls ein Session Handover von einem HDTV-fähigen Endgerät auf einen Mobilen Digitalen Assistent (MDA) realisiert werden soll. Da das Display des MDA vergleichweise niedrigauflösend ist, sind Details der visuellen Übertragung Videol nicht mehr erkennbar. Der verminderte Informationsfluss wird von dem SOCC erkannt und es wird eine weitere Audiospur Audio2 angefordert, um den Nachteil zu kompensieren. Handelt es sich bei dem zu übertragenen Ereignis z.B. um ein Live-Sportevent wie z.B. ein Fußballspiel, so wäre der Ball auf dem MDA Display nur noch schwer erkennbar. Durch die automatische Aktivierung eines zusätzlichen informationsangereicherten Audiostreams, z.B. eine Radioberichterstattung über das Spiel, wird dem Kunden die bestmögliche inhaltliche Verfolgung des Ereignisses ermöglicht. Auch kann zusätzlich ein Text übertragen werden, der detailliert die Ereignisse schildert.

Die Vorteile des zu vorliegenden Content Handovers sind jedoch nicht auf Live-Events beschränkt. So werden heute bereits viele Filme mit einer zusätzlichen Tonspur produziert. Diese Audiodeskriptionen liefern eine verbale Beschreibung der eigentlichen Handlung und könnten so bei Bedarf durch SOCC und MSSM mit eingespielt werden.

Eine inhaltliche Adaption eines zu übertragenden Ereignisses muss nicht notwendigerweise durch einen Session Handover (Gerätewechsel) bedingt sein. So kann es z.B. auch sein, dass die Umschaltung auf eine erweiterte Audiodeskription Audio2 notwendig ist, weil die Funkversorgung einbricht und der Videostrom Videol nicht länger übertragen werden kann. Statt dann nur noch auf den originären Audiostrom Audiol angewiesen zu sein, kann automatisch ein das Ereignis besser beschreibender Audiostrom Audio2 selektiert werden. Obwohl Audiol und Audio2 die gleiche Bandbreite benötigen würden, bietet Audio2 dem Nutzer eine bessere Synchronizität zum Ereignis.

Von Vorteil wäre die Substitution eines Videosignals durch ein erweitertes Audiosignal auch für den Fall, dass ein mobiler Teilnehmer in ein Fahrzeug steigt und somit der visuellen Information nicht mehr folgen kann/darf.

Ein weiterer Aspekt ist die kundenspezifische Informationsübertragung.

Die profilgesteuerte Übertragung von Ereignissen erlaubt es kundenspezifische Video- und Audiostreams zu komponieren, welche von einem Inhalteanbieter alleine nicht zur Verfügung gestellt werden können. Wird zum Beispiel eine Übertragung nur in einer Sprache angeboten, so könnte durch das hier beschriebene Verfahren automatisch eine Alternativsprache zum Videosignal gemultiplext werden. Würde zum Beispiel eine Gruppe von Deutschen einem Video/Audio Primärereignis auf deutsch (Audiol) folgen, so könnte die Sprache automatisch auf englisch (audio2) wechseln, sobald ein weiterer nichtdeutschsprachiger Teilnehmer hinzukommt.

Auch ist eine behindertengerechte Informationsdarstellung möglich.
Die automatische Selektion der Quellen nach Vorgabe durch Profile erlaubt eine informationsoptimierte Darstellung der Inhalte auch für behinderte Menschen. So können die erweiterten Audiodeskriptionen speziell dann zugeschaltet werden, wenn Menschen mit einer Sehbehinderung an der Übertragung eines Ereignisses teilhaben wollen. Die automatische Inhaltelokalisierung durch CLDS sorgt für eine kundenfreundliche und einfache Integration entsprechender Streams in den Medienfluss. Ebenso könnten weitere Quellen integriert werden wie etwa Untertitel, welche mittels Sprachsynthese in einen Audiostream konvertiert und durch den MSSM in den Multimedia-Stream eingebettet werden oder die Einblendung eines Kleinbildes mittels PiP-Technik (Picture in Picture) zur Darstellung von Gebärdensprache für Hörbehinderte

Ein weiterer Aspekt sind Dienst. Neue Dienste wie "Persönliche Nachrichten" oder Firmennachrichten könnten bereits in verschieden Präsentationsformen (Videoclip, Audioclip, Text-Message) an das Verfahren angepasst hergestellt und bereitgestellt werden, so dass ein fließender, situationsangepasster Übergang (in der Firma, zuhause, unterwegs, im Auto ...) zwischen den Informationsformen leicht realisierbar ist.

### Abkürzungen

| | |
|---|---|
| ABC | Always Best Connected |
| AS | Application (Anwendungs) Server |
| CLDS | Content Locater, Discovery & Selection |
| CSCF | Serving Call Session Control Function |
| E2E | End-to-End |
| HDTV | High Definition Television |
| HSS | Horne Subscriber Server |
| IMS | IP Multimedia Subsystem |
| MDA | Mobile Digital Assistant |
| MGW | Media Gateway (Function) |
| MRFC | Multimedia Resource Function Controller |
| MRFP | Multimedia Resource Function Processor |
| MSSM | Multimedia Stream SplitterlMerger |
| PPMT | Profile & Priority Management |
| S-CSCF | Serving-CSCF |
| SIP | Session Initiation Protocol |
| SOCC | Stream Observation & Content-Classification |
| VoIP | Voice over IP |

### Referenzen

[1] ETSI TISPAN (Telecoms & Internet converged Services & Protocols for Advanced Networking), http:llwww.etsi.org/tispan/
[2] 3GPP TSG SA WG2 (Technical Specification Group - Service and System Aspects - Working Group 2 (Architecture)), http:llwww.3gpp.org/TBISA/SA2ISA2.htm
[3] U. Trick, F. Weber, "SIP, TCP/IP und Telekommunikationsdienste",: Oldenbourg Verlag; 2. Auflage (erw. u. aktualis.), ISBN-13: 978-3486577969, Oktober 2005
[4] 3GPP TS 23.228, "IP Multimedia Subsystem (IMS); Stage 2"
[5] Rosenberg, Schulzrinne et al., "SIP: Session Initiation Protocol", IETF RFC 3261, June 2002
[6] 3GPP TS23.228 v8.1.0, "IP Multimedia Subsystem (IMS); Stage 2, Release 8", June 2007

## Patentansprüche

1. Verfahren zur Optimierung eines Informationsflusses eines Multimediainhalts, wobei der Informationsfluss aus Audiodaten, Videodaten, Textdaten oder einer Kombination von Audio, Videodaten und/oder Textdaten besteht, zwischen einem Sender und mindestens einem Empfänger über ein Netzwerk;
wobei für den Informationsfluss jeweils parallel eine Mehrzahl von Audiodaten, Textdaten und/oder Videodaten mit unterschiedlichen Qualitäten und unterschiedlichen inhaltlichen Umfang bereitstehen, die den gleichen Multimediainhalt beschreiben,
wobei in Abhängigkeit von einstellbaren Ereignissen zur Laufzeit, ein verändertes Multiplexen der Audio, Video und/oder Textdaten vorgenommen wird, so dass eine kontinuierliche Weiterverfolgung des Multimediainhalts durch einen Benutzer ermöglicht wird, wobei der Empfänger an einem IP Multimedia Subsystem, IMS, in Form von Sessions angemeldet ist, und wobei das Ereignis zum Verändern des Multiplexens ein Session-Handover ist und wobei bei einer Verschlechterung der Übertragungsbedingungen, das Multiplexen auf Informationen zurückgreift, die ein geringeres Datenvolumen aufweisen, indem die Qualität der Videodaten reduziert wird und die Audiodaten durch inhaltlich umfangreichere Audiodaten und/oder die Textdaten durch inhaltlich umfangreichere Textdaten ersetzt werden.

2. Das Verfahren nach dem vorhergehenden Anspruch, wobei die Reduzierung der Videodaten bis zum völligen Weglassen der Videodaten führt.

3. Das Verfahren nach einem oder mehreren der vorhergehenden Ansprüche, wobei
sich die Veränderung des Multiplexens an hinterlegten Profilen orientieren;
und/oder
Kenngrößen eines Netzes wie der Ressourcenverfügbarkeit ausrichten
und/oder
der Leistungsfähigkeit und den technischen Eigenschaften des Senders/Empfängers
ausrichten.

4. Das Verfahren nach dem vorhergehenden Anspruch, wobei ein Benutzer interaktiv die Informationsdichte einzelner Daten bestimmt.

5. Das Verfahren nach dem vorhergehenden Anspruch, wobei ein Benutzer durch Regler die Informationsdichte der einzelnen Daten bestimmt.

6. Das Verfahren nach einem oder mehreren der vorhergehenden Ansprüche, wobei bei einer technischen Kompression der Multimediainhalt umfassend Videodaten und Audiodaten in unterschiedlichen Kompressionsstufen abgespeichert sind, oder in Echtzeit die Videodaten und Audiodaten in unterschiedlichen Kompressionsstufen Rohdaten erzeugt werden, wobei die inhaltliche Kompression oder die inhaltliche Extension durch unterschiedliche Daten erreicht werden, die parallel abgelegt sind und mit Zeitinformationen versehen sind, so dass eine fließender Wechsel beim Multiplexen der Daten erfolgen kann.

7. Das Verfahren nach einem oder mehreren der vorhergehenden Ansprüche, wobei die einzelnen Bestandteile ein Content- und Streaming- Server sind deren Funktionen ergänzt werden durch
i. Multimedia Stream Splitter/Merger, MSSM, zur
1. Kopplung verschiedener Multimedia-Streams;
2. Synchronisierung zeitlich versetzter Informationspfade;
3. Unterdrückung einzelner Teilströme ohne signifikanten Anteil am Gesamtinformationsfluss;
ii. Stream Observation und Content-Classification, SOCC, zur
1. Beobachtung und korrelierten Bewertung der einzelnen Informationspfade;
2. Triggergenerierung für die Hinzuschaltung weiterer Quellen;
3. Generierung von Transkodier-Anweisungen.

8. Das Verfahren nach dem vorhergehenden Anspruch, umfassend ein System zur Speicherung des Mulitmediainhalts, umfassend
einen Content Locator, Discovery & Selection, CLDS, zur
1. Verwaltung und proaktiven Speicherung von Quellen zu einem Primärereignis;
2. reaktiven Suche weiterer Quellen zu einem Primärereignis.

9. Das Verfahren nach dem vorhergehenden Anspruch, umfassend ein System zum
Profile und Priority Management, PPMT, zur Speicherung spezieller Profile, welche inhaltliche Optimierungspräferenzen erlauben, die sowohl Benutzerabhängig sein können, als auch auf technischen Randbedingungen basieren und Form und Verhältnis des Multiplexens der einzelnen Multimediainhalte beschreiben.

10. Das Verfahren nach einem oder mehreren der vorhergehenden Ansprüche, wobei das Multiplexen sowohl auf Seiten des Senders als auch auf Seiten des Empfängers erfolgen kann.

11. Das Verfahren nach dem vorhergehenden Anspruch, wobei der Sender einen gemultiplexten Informationsfluss erzeugt oder alternativ mehrere parallele Informationsflüsse gesendet werden, die auf dem Empfänger gemultiplext werden.

12. Das Verfahren nach dem vorhergehenden Anspruch, wobei auf dem Server eine Reihe von Informationsflüssen abgelegt sind und vom Empfänger, die Auswahl und Zusammenstellung selbstständig erfolgt, um dann aus den parallelen Strömen, die vom Empfänger erhalten werden einen Multimediastrom zu multiplexen.

13. Das Verfahren nach einem oder mehreren der vorhergehenden Ansprüche, **gekennzeichnet durch** einen Ablauf in einer IMS gesteuerten Plattform, wobei das Multiplexen durch einen, MSSM, wahrgenommen wird, durch einen dedizierten Application Server das Zusammenspiel von MRFP und IMS-MGW Funktionen gesteuert wird; die Art der Zusammenstellung der Informationsflüsse durch SOCC Funktionen wahrgenommen wird und durch Erweiterungen innerhalb einer Call Session Control Function, CSCF.

14. Das Verfahren nach einem oder mehreren der vorhergehenden Ansprüche, wobei das Splitten und Multiplexen durch einen CLDS wahrgenommen wird, umfassend einen
a. dedizierte Application Server; und durch
b. das Zusammenspiel von MRFP und IMS-MGW Funktionen.

15. Das Verfahren nach einem oder mehreren der vorhergehenden Ansprüche, wobei die Profilverwaltung durch Erweiterungen innerhalb des Horne Subscriber Servers, HSS, stattfindet, welcher über SIP Support verfügt.

16. Vorrichtung zur Optimierung eines Informationsflusses eines Multimediainhalts, wobei der Informationsfluss aus Audiodaten, Videodaten, Textdaten oder einer Kombination von Audio, Videodaten und/oder Textdaten besteht, mit einem Sender und/oder Empfänger, die den Informationsfluss über ein Netzwerk senden oder Empfangen, wobei für den Informationsfluss jeweils parallel eine Mehrzahl von Audiodaten, Textdaten und/oder Videodaten mit unterschiedlichen Qualitäten und unterschiedlichen inhaltlichen Umfang bereitstehen, die den gleichen Multimediainhalt beschreiben, und auf einem Speichersystem abgelegt sind,
wobei Mittel vorhanden sind, die in Abhängigkeit von einstellbaren Ereignissen zur Laufzeit, ein verändertes Multiplexen der Audio, Video und/oder Textdaten vornehmen, so dass eine kontinuierliche Weiterverfolgung des Multimediainhalts durch einen Benutzer ermöglicht wird, wobei das Ereignis zum Verändern des Multiplexens ein Session- Handover eines Empfängers ist, der an einem IP Multimedia Subsystem, IMS, über eine Session angemeldet ist, wobei Mittel vorhanden sind, die bei einer Verschlechterung der Übertragungsbedingungen beim Multiplexen auf Informationen zurückgreifen, die ein geringeres Datenvolumen aufweisen, indem die Qualität der Videodaten reduziert wird und die Audiodaten durch inhaltlich umfangreichere Audiodaten und/oder die Textdaten durch inhaltlich umfangreichere Textdaten ersetzt werden.

17. Die Vorrichtung nach dem vorhergehenden Vorrichtungsanspruch, wobei die Reduzierung der Videodaten bis zum völligen Weglassen der Videodaten führt.

18. Die Vorrichtung nach einem oder mehreren der vorhergehenden Vorrichtungsansprüche, wobei die Veränderung des Multiplexens sich an
i. hinterlegten Profilen orientieren; und/oder
ii. Kenngrößen eines Netzes wie der Ressourcenverfügbarkeit ausrichten
und/oder
iii. der Leistungsfähigkeit und den technischen Eigenschaften des Senders/Empfängers ausrichten.

19. Die Vorrichtung nach dem vorhergehenden Anspruch, wobei Mittel vorhanden sind, die es einem Benutzer erlauben, interaktiv die Informationsdichte einzelnen Daten zu bestimmen.

20. Die Vorrichtung nach dem vorhergehenden Anspruch, wobei Regler vorhanden sind, durch die ein Benutzer die Informationsdichte der einzelnen Daten bestimmt.

21. Die Vorrichtung nach einem oder mehreren der vorhergehenden Vorrichtungsansprüche, wobei auf einem Speichermedium für eine technische Kompression der Multimediainhalt in Form von Videodaten und Audiodaten in unterschiedlichen Auflösungen abgelegt sind, oder Mittel vorhanden sind, die diese in Echtzeit aus Rohdaten erzeugen, wobei die inhaltliche Kompression oder inhaltliche Extension durch unterschiedliche Daten erreicht werden, die parallel abgelegt sind und mit Zeitinformationen versehen sind, so dass ein fließender Wechsel beim Multiplexen der Daten erfolgen kann.

22. Die Vorrichtung nach einem oder mehreren der vorhergehenden Vorrichtungsansprüche, wobei die einzelnen Bestandteile ein Content- und Streaming Server sind, deren Funktionen ergänzt werden durch
i. Multimedia Stream Splitter/Merger, MSSM, zur
1. Kopplung verschiedener Multimedia-Streams;
2. Synchronisierung zeitlich versetzter Informationspfade;
3. Unterdrückung einzelner Teilströme ohne signifikanten Anteil am Gesamtinformationsfluss;
ii. Stream Observation & Content-Classification, SOCC, zur
1. Beobachtung und korrelierten Bewertung der einzelnen Informationspfade;
2. Triggergenerierung für die Hinzuschaltung weiterer Quellen;
3. Generierung von Transkodier-Anweisungen.

23. Die Vorrichtung nach dem vorhergehenden Vorrichtungsanspruch, umfassend ein System zur Speicherung des Multimediainhalts; weiterhin umfassend einen Content Locator Discovery & Selection, CLDS, zur
1. Verwaltung und proaktive Speicherung von Quellen zu einem Primärereignis;
2. reaktiven Suche weiterer Quellen zu einem Primärereignis.

24. Die Vorrichtung nach dem vorhergehenden Vorrichtungsanspruch, umfassend ein System zum Profile und Priority Management, PPMT, zur Speicherung spezieller Profile, welche inhaltliche Optimierungspräferenzen erlauben, die sowohl Benutzerabhängig sein können, als auch auf technischen Randbedingungen basieren und Form und Verhältnis des Multiplexens der einzelnen Multimediainhalte beschreiben.

25. Die Vorrichtung nach einem oder mehreren der vorhergehenden Vorrichtungsansprüche, wobei Mittel vorhanden sind, die das Multiplexen sowohl auf Seiten des Senders als auch auf Seiten des Empfängers durchführen können.

26. Die Vorrichtung nach dem vorhergehenden Vorrichtungsanspruch, wobei entweder der Sender ausgebildet ist, um einen gemultiplexten Informationsfluss zu erzeugen oder der Empfänger ausgebildet ist, um mehrere parallele Informationsflüsse vom Sender anzufordern, die auf dem Empfänger gemultiplext werden.

27. Die Vorrichtung nach dem vorhergehenden Vorrichtungsanspruch, wobei auf dem Server eine Reihe von Informationsflüssen auf einem Speichermedium abgelegt sind und vom Empfänger die Auswahl und Zusammenstellung selbstständig erfolgt, um dann aus den parallelen Strömen, die vom Empfänger erhalten werden, einen Multimediastrom zu multiplexen.

28. Die Vorrichtung nach einem oder mehreren der vorhergehenden Ansprüche, umfassend eine IMS gesteuerten Plattform, wobei das Multiplexen durch einen MSSM wahrgenommen wird und durch einen dedizierten Application Server das Zusammenspiel von MRFP und IMS-MGW Funktionen gesteuert werden; und Mittel vorhanden sind, die die Art der Zusammenstellung der Informationsflüsse durch SOCC Funktionen wahrnehmen und durch Erweiterungen innerhalb einer Call Session Control Function, CSCF.

29. Die Vorrichtung nach einem oder mehreren der vorhergehenden Vorrichtungsansprüche, wobei das Splitten und Multiplexen durch einen CLDS wahrgenommen werden, umfassend einen
a. dedizierten Application Server; und durch
b. das Zusammenspiel von MRFP und IMS-MGW Funktionen.

30. Die Vorrichtung nach einem oder mehreren der vorhergehenden Vorrichtungsansprüche, wobei die Profilverwaltung durch Erweiterungen innerhalb des Horne Subscriber Servers, HSS, erfolgt, welcher über entsprechende Signalisieroptionen verfügt, wie z.B. SIP Support.

## Claims

1. Method for optimizing an information flow of multimedia content, wherein the information flow consists of audio data, video data, text data or a combination of audio, video data and/or text data, between a transmitter and at least one receiver via a network;
Wherein audio data, text data and/or video data of different quality and content are available for the information flow, describing the same multimedia content,
Wherein, depending on adjustable events at runtime, a changed multiplexing of the audio, video and/or text data is performed so that a user can continuously follow up the multimedia content, wherein the receiver is logged on to an IP multimedia subsystem, IMS, in the form of sessions, and wherein the event for changing the multiplexing is that of a session handover,
wherein, in the event of a deterioration in transmission conditions, multiplexing relies on information having a lower data volume by reducing the quality of the video data and replacing the audio data with more extensive audio data and/or the text data with more extensive text data.

2. The method according to the previous claim, wherein the reduction of the video data leads to the complete omission of the video data.

3. The method according to one or more of the preceding claims, wherein
the change of multiplexing is based on
stored profiles;
and/or
network parameters such as resource availability
and/or
the performance and technical characteristics of the transmitter/receiver.

4. The method according to the previous claim, wherein a user interactively determines the information density of individual data.

5. The method according to the previous claim, wherein a user determines the information density of the individual data by means of a controller.

6. The method according to one or more of the preceding claims, wherein in the case of technical compression the multimedia content comprising video data and audio data is stored in different compression levels, or the video data and audio data are generated in real time in different compression levels raw data, wherein the content compression or the content extension is achieved by different data which are stored in parallel and are provided with time information, so that a smooth change can take place when multiplexing the data.

7. The method according to one or more of the preceding claims, wherein the individual components being a content and streaming server whose functions are supplemented by
i. Multimedia Stream Splitter/Merger, MSSM, for
1. coupling of different multimedia streams;
2. synchronizing of time-shifted information paths;
3. suppressing of individual partial streams without a significant share of the total information flow;
ii. Stream Observation and Content Classification, SOCC, for
1. observing and correlated evaluation of the individual information paths;
2. trigger generating for the adding of further sources;
3. generating of transcoding instructions.

8. The method according to the previous claim, comprising a system for storing the multimedia content, comprising
a Content Locator, Discovery & Selection, CLDS, for the
1. management and proactive storage of sources for a primary event;
2. reactive search for further sources for a primary event.

9. The method according to the previous claim, comprising a system for Profiles and Priority Management, PPMT, for storage of special profiles, which allow content optimization preferences, which can be user-dependent as well as based on technical boundary conditions and describe the form and ratio of multiplexing of the individual multimedia content.

10. The method one or more of the preceding claims, where multiplexing may be performed both on the sender's and the recipient's side.

11. The method according to the previous claim, wherein the sender generates a multiplexed information flow or alternatively several parallel information flows are sent which are multiplexed on the receiver.

12. The method according to the previous claim, wherein a series of information flows are stored on the server and the receiver selects and assembles them independently in order to multiplex a multimedia stream from the parallel streams received from the receiver.

13. The method according to one or more of the preceding claims, **characterized by** a sequence in an IMS controlled platform, wherein multiplexing is performed by an MSSM, the interaction of MRFP and IMS-MGW functions is controlled by a dedicated application server; the manner of compiling the information flows is performed by SOCC functions and by extensions within a Call Session Control Function, CSCF.

14. The method according to one or more of the preceding claims, wherein the splitting and multiplexing is performed by a CLDS, comprising a
a. dedicated application servers; and by
b. the interaction of MRFP and IMS-MGW functions.

15. The method according to one or more of the preceding claims, wherein the profile management takes place through extensions within the Horne Subscriber Server, HSS, which has SIP support.

16. Device for optimizing an information flow of multimedia content, wherein the information flow consists of audio data, video data, text data or a combination of audio, video data and/or text data, with a transmitter and/or receiver which send or receive the information flow via a network, wherein a plurality of audio data, text data and/or video data of different qualities and different content scope, which describe the same multimedia content, are provided in parallel for the information flow and are stored on a storage system,
wherein means are provided for modifying multiplexing of the audio, video and/or text data, depending on adjustable events at runtime, so that a user can continuously follow up the multimedia content, wherein the event for modifying the multiplexing is a session handover of a receiver connected to an IP multimedia subsystem, IMS, in a session, means being present which, in the event of a deterioration in the transmission conditions during multiplexing, access information which has a lower data volume by reducing the quality of the video data and replacing the audio data with more extensive audio data and/or the text data with more extensive text data.

17. The device according to the previous device claim, wherein the reduction of the video data leading to the complete omission of the video data.

18. The device according to one or more of the preceding device claims, wherein
the change of multiplexing is oriented according to
i. stored profiles;
and/or
ii. network parameters such as resource availability
and/or
iii. the performance and technical characteristics of the transmitter/receiver.

19. the device according to the previous claim, wherein means being provided allowing a user to interactively determine the information density of individual data.

20. the device according to the previous claim, wherein controls being provided by which a user determines the information density of the individual data.

21. The device according to one or more of the preceding device claims, wherein the multimedia content is stored on a storage medium for technical compression in the form of video data and audio data in different resolutions, or means are present which generate these in real time from raw data, wherein the content compression or content extension is achieved by different data which are stored in parallel and are provided with time information, so that a smooth change can take place when multiplexing the data.

22. the device according to one or more of the preceding device claims, wherein the individual components being a content and streaming server whose functions are supplemented by
i. Multimedia Stream Splitter/Merger, MSSM, for
1. coupling of different multimedia streams;
2. synchronizing of time-shifted information paths;
3. suppressing of individual partial streams without a significant share of the total information flow;
ii. Stream Observation & Content Classification, SOCC, for
1. observing and correlated evaluating of the individual information paths;
2. trigger generating for the addition of further sources;
3. generating of transcoding instructions.

23. The device according to the previous device claim, comprising a system for storing the multimedia content; further comprising a Content Locator Discovery & Selection, CLDS, for the
1. management and proactive storage of sources for a primary event;
2. reactive search for further sources for a primary event.

24. The device according to the previous device claim, comprising a system for Profiles and Priority Management, PPMT, for
Storage of special profiles, which allow content optimization preferences, which can be user-dependent as well as based on technical boundary conditions and describe the form and ratio of multiplexing of the individual multimedia content.

25. the device according to one or more of the preceding device claims, means being provided capable of multiplexing on both the transmitter and receiver sides.

26. The device according to the previous device claim, wherein either the transmitter is adapted to generate a multiplexed information flow or the receiver is adapted to request multiple parallel information flows from the transmitter that are multiplexed on the receiver.

27. The device according to the previous device claim, wherein a series of information flows are stored on a storage medium on the server and the selection and compilation is carried out independently by the receiver, in order then to multiplex a multimedia stream from the parallel streams received from the receiver.

28. The device according to one or more of the preceding device claims, comprising an IMS controlled platform, wherein multiplexing is perceived by an MSSM and the interaction of MRFP and IMS-MGW functions is controlled by a dedicated application server;
and means are provided which detect the manner of compiling the information flows by SOCC functions and by extensions within a Call Session Control Function, CSCF.

29. the device according to one or more of the preceding device claims, wherein the splitting and multiplexing are perceived by a CLDS comprising a
a. dedicated application server; and by
b. the interaction of MRFP and IMS-MGW functions.

30. The device according on one or more of the preceding device claims, wherein the profile management is done by extensions within the Horne Subscriber Server, HSS, which has corresponding signaling options, e.g. SIP support.

## Revendications

1. Un procédé pour optimiser un flux d'informations d'un contenu multimédia, dans lequel le flux d'informations consiste en des données audio, des données vidéo, des données textuelles ou une combinaison de données audio, vidéo et/ou textuelles, entre un émetteur et au moins un récepteur via un réseau;
dans lequel les données audio, les données textuelles et/ou les données vidéo de contenu et de qualité différents sont disponibles au sein du flux d'information, décrivant le même contenu multimédia,
dans lequel, en fonction d'événements ajustables à l'exécution, on réalise un multiplexage modifié des données audio, vidéo et/ou textuelle afin qu'un utilisateur puisse suivre de manière continue le contenu multimédia, dans lequel le récepteur est enregistré sur un sous-système multimédia IP, IMS dans la forme de sessions, et dans lequel l'événement de modification du modification du multiplexage est un transfert de session,
dans lequel, dans la situation d'un événement de détérioration de conditions de transmission, le multiplexage repose sur des informations ayant un volume de données inférieur en réduisant la qualité des données vidéo et en remplaçant les données audio avec des données audio plus étendues et/ou des données textuelles avec des données textuelles plus étendues.

2. Le procédé selon la revendication précédente, dans lequel la réduction des données vidéo entraîne l'omission complète des données vidéo.

3. Le procédé selon l'une ou plusieurs des revendications précédentes, dans lequel, la modification du multiplexage est basée sur
des profils sauvegardés ;
et/ou
des paramètres de réseau tels que la disponibilité de ressources
et/ou
la performance et les caractéristiques techniques du transmetteur/récepteur.

4. Le procédé selon la revendication précédente, dans lequel un utilisateur détermine interactivement la densité d'informations de données individuelles.

5. Le procédé selon la revendication précédente, dans lequel un utilisateur détermine, par des contrôleurs, la densité d'informations des données individuelles.

6. Le procédé selon une ou plusieurs des revendications précédentes, dans lequel dans le cas d'une compression technique, on sauvegarde le contenu multimédia comprenant des données vidéo et des données audio dans différents niveaux de compression, ou les données vidéo et les données audio sont générées en temps réelle dans différents niveaux de compression, dans lequel la compression de contenu ou l'extension de contenu est réalisé au moyen de différentes données qui sont stockées en parallèle et sont fournies avec des informations temporelles, de sorte qu'un changement en douceur peut s'opérer dans le multiplexage des données.

7. Le procédé selon l'une ou plusieurs des revendications précédentes, dans lequel les composants individuels sont un serveur de contenu et de streaming dont les fonctions sont complétées par
i. la division/combinaison de flux multimédia MSSM pour
1. le couplage de différents flux multimédia;
2. la synchronisation des chemins d'information échelonnés;
3. la suppression des flux partiels individuels sans partage significatif du flux total d'informations ;
ii. Une observation de flux et classification de contenu (SOCC) pour
1. l'observation et l'évaluation corrélée des chemins d'information individuels;
2. La génération de déclencheurs pour l'ajout de sources supplémentaires;
3. la génération d'instructions de transcodage.

8. Le procédé selon la revendication précédente, comprenant un système pour stocker le contenu multimédia, comprenant
a un localisateur de contenu, découverte et sélection (CLDS), pour
1. la gestion et le stockage proactif des sources pour un événement principal;
2. la recherche réactive d'autres sources pour un événement primaire.

9. Le procédé selon la revendication précédente, comprenant un système de gestion de profil et de priorité (PPMT) pour stocker de profils spécifiques, permettant des préférences d'optimisation de contenu, lesquelles peuvent dépendre de l'utilisateur ainsi que des contraintes techniques et expose la forme et le rapport de multiplexage du contenu multimédia individuel.

10. Le procédé selon l'une ou plusieurs des revendications précédentes, dans lequel le multiplexage peut être effectué à la fois du côté émetteur et du côté récepteur.

11. Le procédé selon la revendication précédente, dans lequel l'émetteur génère un flux d'informations multiplexé, ou en variante, une pluralité de flux d'informations parallèles sont multiplexées sur le récepteur.

12. Le procédé selon la revendication précédente, dans lequel une série de flux d'informations sont stockés sur le serveur et le récepteur sélectionne et les assemble indépendamment pour multiplexer un flux multimédia à partir des flux parallèles reçus par le récepteur.

13. Le procédé selon l'une ou plusieurs des revendications précédentes, **caractérisé par** un ordonnancement dans une plate-forme commandée par IMS, dans lequel le multiplexage est effectué par un MSSM, l'interaction des fonctions MRFP et IMS-MGF étant commandé par un serveur d'application dédié ; la manière de compiler les flux d'information étant réalisée par des fonctions SOCC et par des extensions au sein d'une fonction de Session d'Appel, CSCF.

14. Le procédé selon l'une ou plusieurs des revendications précédentes, dans lequel la division et le multiplexage sont effectués par un CLDS comprenant un
a. des serveurs d'application dédiés; et par
b. l'interaction des fonctions MRFP et IMS-MGW.

15. Le procédé selon l'une ou plusieurs des revendications précédentes, dans lequel la gestion de profil est réalisé par des extensions dans le serveur d'abonné Horne (HSS), ayant un support SIP.

16. Un dispositif d'optimisation du flux d'informations d'un contenu multimédia, dans lequel le flux d'information consiste en données audio, en données vidéo, en données textuelles ou une combinaison de données audio, de données vidéo et/ou de données textuelles, avec un transmetteur et/ou un récepteur qui transmet ou reçoit le flux d'information via un réseau, dans lequel une pluralité de données audio, de données textuelles et/ou de données vidéo de différente qualité et de contenu différent, décrivant le même contenu multimédia, sont fournis parallèlement pour le flux d'information et sont stockés sur un système de stockage,
dans lequel des moyens sont fournis pour modifier le multiplexage des données audio, vidéo et/ou textuelles, en fonction d'événements ajustables à l'exécution, de telle façon qu'un utilisateur peut continuellement suivre le contenu multimédia, dans lequel l'événement de modification du multiplexage est un transfert de session d'un récepteur connecté à un sous-système multimédia IP, IMS dans une session, on prévoit des moyens pour accéder, dans le cas d'une détérioration de conditions de transmission durant le multiplexage, à une information ayant un volume de données inférieur en réduisant la qualité des données vidéo et en remplaçant les données audio avec des données audio plus étendues et/ou des données textuelles par des données textuelles plus étendues.

17. Le dispositif selon la revendication précédente, dans lequel la réduction des données vidéo conduisent à une omission complète des données vidéo.

18. Le dispositif selon l'une ou plusieurs des revendications de dispositif précédentes, dans lequel la modification du multiplexage est orientée en fonction
i. des profils sauvegardés ;
et/ou
ii. des paramètres de réseau tels que la disponibilité de ressources
et/ou
iii. la performance et les caractéristiques techniques du transmetteur/récepteur.

19. Le dispositif selon la revendication précédente, dans lequel des moyens sont pourvus permettant à un utilisateur de déterminer interactivement la densité d'informations de données individuelles.

20. Le dispositif selon la revendication précédente, dans lequel des contrôleurs sont pourvus au moyen desquelles un utilisateur détermine, la densité d'informations des données individuelles.

21. Le dispositif selon une ou plusieurs des revendications de dispositif précédentes, dans lequel le contenu multimédia est stocké sur un support de stockage pour une compression technique sous la forme de données vidéo et de données audio de résolutions différentes, ou des moyens sont présents qui génère ces données en temps réelle à partir de données brutes, dans lequel la compression de contenu ou l'extension de contenu est obtenu par des données différentes qui sont stockées en parallèle, et qui sont fournies avec une information temporelle, de telle façon qu'un changement en douceur puisse s'opérer lors du multiplexage de données.

22. Le dispositif selon l'une ou plusieurs des revendications de dispositif précédentes, dans lequel les composants individuels sont un serveur de contenu et de streaming dont les fonctions sont complétées par
i. Multimédia Stream Splitter / Merger (MSSM) pour
1. le couplage de différents flux multimédia;
2. la synchronisation des chemins d'information échelonnés;
3. la suppression des flux partiels individuels sans partage significatif du flux total d'informations ;
ii. Une observation de flux et classification de contenu (SOCC) pour
1. l'observation et l'évaluation corrélée des chemins d'information individuels;
2. La génération de déclencheurs pour l'ajout de sources supplémentaires;
3. la génération d'instructions de transcodage.

23. Le dispositif selon la revendication précédente, comprenant un système pour stocker le contenu multimédia, comprenant en outre un localisateur de contenu, découverte et de sélection (CLDS), pour
1. la gestion et le stockage proactif des sources pour un événement principal;
2. la recherche réactive d'autres sources pour un événement primaire.

24. Le dispositif selon la revendication précédente, comprenant un système pour une Gestion des Profils et des Priorités, PPMT, pour le stockage de profils spécifiques, qui permettent des préférences d'optimisation de contenu, pouvant dépendre de l'utilisateur mais également pouvant être basé sur des conditions de frontières techniques et décrivant la forme et le rapport de multiplexage du contenu multimédia individuel.

25. Le dispositif selon une ou plusieurs des revendications de dispositif précédentes, comprenant des moyens capables de multiplexer des deux côtés du transmetteur et du récepteur.

26. Le procédé selon la revendication de dispositif précédente, dans lequel le transmetteur est adapté pour générer un flux d'information multiplexé ou le récepteur est adapté pour requérir du transmetteur des flux d'information parallèles multiples qui sont multiplexés sur le récepteur.

27. Le dispositif selon la revendication de dispositif précédente, dans lequel une séries de flux d'information sont stockés sur un support de stockage sur le server et la sélection et la compilation sont effectuées indépendamment par le récepteur, afin de multiplexer ensuite un flux multimédia à partir des flux parallèles reçus par le récepteur.

28. Le dispositif selon une ou plusieurs des revendications de dispositif précédentes, comprenant une plateforme commandée par IMS, dans lequel le multiplexage est perçu comme un MSSM et l'interaction des fonctions MRFP et IMS-MGW est commandée par un serveur d'application dédié ; et des moyens sont mis à disposition pour détecter la manière de compiler les flux d'information par des fonctions SOCC et par des extension au sein d'une Fonction de Commande de Session d'Appel, CSCF.

29. Le dispositif selon une ou plusieurs des revendications de dispositif précédentes, dans lequel la division et le multiplexage sont perçus par un CLDS comprenant
a. un serveur d'application dédié; et par
b. l'interaction des fonctions MRFP et IMS-MGW.

30. Le dispositif selon une ou plusieurs des revendications de dispositif précédentes, dans lequel la gestion de profil a lieu par des extensions dans le serveur d'abonné Horne (HSS) ayant des options de signalisation correspondantes, telles que par ex. un support SIP.
